# EUROPÄISCHE PATENTSCHRIFT

(11) **EP 2 368 024 B1**
(45) Veröffentlichungstag und Bekanntmachung des Hinweises auf die Patenterteilung: **11.11.2015**
(21) Anmeldenummer: 09799253.1
(22) Anmeldetag: 12.12.2009
(51) Int. Cl.: F01N 3/20, F01N 3/36

(54) **VERDAMPFER**
EVAPORATOR
EVAPORATEUR

(30) Priorität: 18.12.2008 DE 102008063515
(43) Veröffentlichungstag der Anmeldung: 28.09.2011
(73) Patentinhaber: DEUTZ Aktiengesellschaft, 51149 Köln (DE)
(72) Erfinder: MIEBACH, Rolf, 50321 Brühl (DE); SCHRAML, Stephan, 53639 Königswinter (DE); BROLL, Peter, 51429 Bergisch-Gladbach (DE); SCHLÜTER, Dirk, 49196 Bad Lear (DE)
(86) Internationale Anmeldenummer: PCT/EP2009/008912
(87) Internationale Veröffentlichungsnummer: WO 2010/069528

(56) Entgegenhaltungen:
- WO-A1-2006/066043
- DE-A1- 4 441 261
- DE-A1-102004 048 335
- DE-A1-102005 039 630
- US-B1- 7 032 376

## Beschreibung

Die Erfindung betrifft eine Verdampfereinrichtung, zusammenwirkend mit einem ein Prozessabgas führenden Abgasrohr, in das eine Abgasleitung der Verdampfereinrichtung einmündet, die einen Brenner mit einer Einspritzvorrichtung für Brennstoff und Luft sowie eine Brennkammer und die Abgasleitung aufweist, und wobei in das Abgasrohr stromabwärts der Einmündung der Abgasleitung eine Abgasnachbehandlungseinrichtung eingesetzt ist, sowie ein Verfahren zum Betreiben einer derartigen Verdampfereinrichtung.

Eine derartige Verdampfereinrichtung ist aus der DE 10 2004 048 336 A1 bekannt. Der in diesem Dokument beschriebene Verdampfer ist in die Abgasanlage einer Brennkraftmaschine eingesetzt, mittels der das Brennkraftmaschinenabgas abgeführt und unerwünschte Emissionen reduziert werden. Dazu sind in der Abgasanlage eine Kraftstoffzuführeinrichtung, ein Oxidationskatalysator und ein Partikelfilter angeordnet. Um die Einbringung des Kraftstoffs in das Abgas zu verbessern, ist eine auch als Verdampfer wirkende Rezirkulationseinheit vorgesehen, die an dem Abgasstrang angeschlossen ist und an die die Kraftstoffzuführeinrichtung angeschlossen ist, so dass die Einbringung von Kraftstoff in das Abgas über oder durch die Rezirkulationseinrichtung erfolgt. Dabei kann der Rezlrkulationseinrichtung neben dem Kraftstoff auch Luft zugeführt werden und das entstandene Gemisch in der als Brenner arbeitenden Rezirkulationseinrichtung gezündet und verbrannt werden. Insbesondere die Kraftstoffmenge kann zur Regelung der Brennerleistung eingestellt werden. Die Brennerleistung muss in Zusammenwirkung mit dem Oxidationskatalysator so bemessen sein, dass bei allen möglichen Betriebszuständen eine Regeneration des Partikelfilters durchführbar ist.

Weiterhin sind Verdampfer für eine Abgasanlage einer Brennkraftmaschine bekannt, die Energie zur Aufheizung und Verdampfung direkt aus dem Prozessabgas beziehen, Solche Verdampfer sind bei niedrigen Prozessabgastemperaturen nicht voll funktionsfähig.

Schließlich sind Verdampfer für eine Abgasanlage einer Brennkraftmaschine bekannt, die Energie zur Aufhelzung und Verdampfung aus elektrischen Heizvorrichtungen beziehen. In vielen Anwendungsfällen ist es schwierig oder unmöglich oder aus Gründen des Wirkungsgrades unerwünscht, die benötigte Menge elektrischer Energie zur Verfügung zu stellen.

Die US 7,032,376 B1 offenbart einen Brenner für ein Abgasnachbehandlungssystem an einer Brennkraftmaschine mit einer Einspritzvorrichtung, die atomisierten Kraftstoff zur Verfügung stellt.

Die DE 44 41 261 A1 zeigt eine Einrichtung zum Nachbehandeln von Abgasen einer selbstzündende Brennkraftmaschine, in deren Abgassammelsystem ein Reduktionskatalysator zur Reduktion von NOx-Bestandteilen, des Abgases der Brennkraftmaschine angeordnet ist und wobei die Einrichtung zur Abgasnachbehandlung eine Dosiervorrichtung aufweist.

Der Erfindung liegt die Aufgabe zugrunde, eine Verdampfereinrichtung beziehungsweise ein Verfahren zum Betreiben einer derartigen Verdampfereinrichtung anzugeben, die/das hinsichtlich der Funktion erweitert beziehungsweise verbessert ist.

Diese Aufgabe wird dadurch gelöst, dass in die Abgasleitung eines Brenners eine Einbringvorrichtung für eine Verdampfflüssigkeit eingesetzt ist. Das entsprechende Verfahren zeichnet sich dadurch aus, dass der Brenner eine thermische Grundleistung zur Verfügung stellt, deren Untergrenze durch die Bereitstellung einer ausreichenden Energiemenge zur Verdampfung einer über eine in die Abgasleitung eingebrachte Verdampffiüssigkeitsmenge vorgegeben ist.

Die erfindungsgemäße Ausgestaltung zeichnet sich dadurch aus, dass die Verdampfereinrichtung für eine beliebige zu verdampfende Flüssigkeit verwendet werden kann. So kann auch eine nicht brennbare Flüssigkeit, beispielsweise eine wässrige Harnstofflösung, verdampft werden. Für den Fall, dass die Flüssigkeit ein Brennstoff ist, ist dieser bevorzugt der gleiche Brennstoff, beispielsweise Dieselkraftstoff, der auch mit der Versorgungsvorrichtung des Brenners eingespritzt wird. Grundsätzlich ist es aber möglich, zum Betreiben des Brenners auch einen gasförmigen Brennstoff, beispielsweise Erdgas, zu verwenden. Die getrennte Einbringung des zusätzlichen Brennstoffs über die Einbringvorrichtung bietet den Vorteil, dass im Gegensatz zum Stand der Technik eine für einen Prozess beispielsweise benötigte Brennstoffmenge nicht mehr insgesamt durch die Versorgungsvorrichtung des Brenners zugeführt werden muss, sondern stromabwärts des Brenners eine Teilmenge des insgesamt benötigten Brennstoffs als "Sekundärbrennstoffmenge" zugeführt wird. Diese Sekundärbrennstoffmenge wird dann letztendlich ganz kontrolliert aufbereitet und/oder verbrannt. Die entsprechenden möglichen Verfahrensvarianten werden nachfolgend im Zusammenhang mit den abhängigen Verfahrensansprüchen erläutert.

In Weiterbildung der Erfindung weist eine Mündung der Einbringvorrichtung in der Abgasleitung eine Zerstäuberdüse, insbesondere eine Druckzerstäuberdüse oder eine Luftstromzerstäuberdüse auf. Mit der Druckzerstäuberdüse wird die Verdampfflüssigkeit allein durch den Druck der Verdampfflüssigkeit zerstäubt. Alternativ kann die Einbringvorrichtung aber auch als Luftstromzerstäuberdüse ausgestaltet sein. Dabei wird die Luftstromzerstäuberdüse so betrieben, dass die Verdampfflüssigkeit mit einer geringen Luftmenge in die Abgasleitung eingebracht wird. Ist die Verdampfflüssigkeit Brennstoff, würde bei normalem Betrieb einer Luftstromzerstäuberdüse beispielsweise 20 I Luft/min. und 2 cm³/min. Brennstoff zur Bereitstellung eines zündfähigen Brennstoff-Luft-Gemisches gefördert werden, während mit der erfindungsgemäß betriebenen Luftstromzerstäuberdüse bis zu 100 cm³/min. Brennstoff gefördert werden. Ein derartig fettes Brennstoff-LuftGemisch ist primär nicht zündfähig.

In weiterer Ausgestaltung ist in der Abgasleitung im Bereich einer Mündung der Einbringvorrichtung eine Venturieinrichtung angeordnet. Diese bewirkt eine schnelle Vermischung der aufeinander treffenden Teilströme von Abgas und Verdampfflüssigkeit.

In weiterer Ausgestaltung der Erfindung sind der Brenner mit der Brennkammer, die Abgasleitung und die Einbringvorrichtung in ein Gehäuse integriert und das Gehäuse ist an das Abgasrohr adaptiert. Es wird somit eine Baueinheit bereitgestellt, die an verschiedene Abgasrohre angebaut werden kann. Dabei kann das Gehäuse im Idealfall so ausgestaltet sein, dass dieses bei Anwendung an einer Brennkraftmaschine bevorzugt brennkraftmaschinennah, beispielsweise direkt hinter der Abgassammelleitung oder einem Abgasturbolader der Brennkraftmaschine, an das Abgassystem angebaut werden kann.

In weiterer Ausgestaltung ragt die Abgasleitung mit zumindest einem Austritt in das Abgasrohr hinein. Dadurch wird eine gute Vermischung der zusammentreffenden Gasströme gewährleistet. Dazu ist die Abgasleitung bevorzugt konzentrisch in das Abgasrohr so eingeführt, dass der Austritt aus der Abgasleitung in Strömungsrichtung des Prozessabgasstroms, also beispielsweise des Brennkraftmaschinenabgasstroms, angeordnet ist. Dadurch wird eine Erhöhung der Strömungsgeschwindigkeit des Prozessabgases erreicht, was für eine schnelle Durchmischung des Gasgemischs aus Brennerabgas und Dampf (verdampfte Verdampfflüssigkeit) mit dem Prozessabgas sorgt. Dadurch kann eine Entzündung des Gasgemischs auch dann verhindert werden, wenn das Prozessabgas Sauerstoff enthält. Um das Auftreten chemischer Reaktionen im Bereich der Einleitung weiter zu unterbinden, können entsprechende Hilfsmittel, die dies unterstützen, vorgesehen sein. Solche mögliche Hilfsmittel sind beispielsweise eine Platte oder ein Kegel, die vor dem Austritt der Abgasleitung angeordnet sind, wobei die Kegelspitze zu dem Austritt der Abgasleitung hin ausgerichtet ist. Auch ist es vorgesehen, zusätzlich oder alternativ zur weiteren Erhöhung der Strömungsgeschwindigkeit im Bereich des Austritts eine Strömungsverengung in dem Abgasrohr beispielsweise in Form einer Venturieinrichtung oder Venturidüse vorzusehen. Mit anderen Worten soll eine mögliche Reaktion des mit Verdampfflüssigkeit aufbereiteten Brennerabgases mit dem Prozessabgas gequencht werden.

In Weiterbildung der Erfindung mündet in die Abgasleitung eine Prozessabgas führende Gasleitvorrichtung ein. Dadurch wird dem Brennerabgas und der Verdampfflüssigkeit Prozessabgas zugeführt. Dadurch wird das Brennerabgas (bei einer Zuführung in Strömungsrichtung vor der Mündung der Einleitvorrichtung) kontrolliert abgekühlt, und zwar in der Form, dass noch genügend Leistung zum Verdampfen der Verdampfflüssigkeit bereitgestellt wird, aber dessen Entzündung (falls die Verdampfflüssigkeit Brennstoff ist) verhindert wird. Die Zuführung kann aber auch im Bereich der Mündung oder in Strömungsrichtung hinter der Mündung erfolgen. Durch geeignete Wahl der beschriebenen Hilfsmittel können die chemische Reaktionen der Verdampfflüssigkeit mit dem Brennerabgas und/oder dem Prozessabgas je nach Bedarf gefördert oder verhindert werden. Insbesondere durch Beeinflussung der Temperatur im Bereich der Einleitvorrichtung ist es möglich, durch Reaktionen der Verdampfflüssigkeit mit dem Brennerabgas gezielt Stoffe zu erzeugen, die in den nachfolgenden Katalysatoren gewünschte Reaktionen unterstützen.

In weiterer Ausgestaltung weist die Abgasnachbehandlungseinrichtung einen Stickstoffoxide selektiv katalytisch reduzierenden Katalysator und/oder einen NOₓ-Speicherkatalysator und/oder einen Oxidationskatalysator und/ oder zumindest einen Partikelfilter auf. Jeder der Katalysatoren beziehungsweise der Katalysator-Partikelfiltersysteme ist mit der erfindungsgemäßen Verdampfungseinrichtung allein oder in beliebiger Kombination betreibbar, wie im Einzelnen nachfolgend im Zusammenhang mit den Betreibungsverfahren erläutert wird. Dabei ist es im Rahmen der Erfindung auch vorgesehen, dass der Oxidationskatalysator ein insbesondere Vanadium enthaltender Mehrzweckkatalysator ist, der auch geeignet ist, die selektive Reduktion von Stickoxiden katalytisch zu unterstützen.

Die zuvor beschriebenen konstruktiven Ausgestaltungen werden zur Umsetzung der nachfolgend beschriebenen weiteren Ausgestaltung des erfindungsgemäßen Betreibungsverfahrens sinnvoll eingesetzt. So wird der Brenner in einem Lambda-Bereich von 0,75 bis 1,75, bevorzugt von 1, betrieben. Weiterhin ist der Brenner so ausgelegt, dass er in einem Leistungsbereich bis 20 kW, bevorzugt bis 15 kW und ganz bevorzugt bis 5 kW, betreibbar ist. Es ist ein Ziel der Erfindung, den Brenner mit einer möglichst geringen Leistung zu betreiben, weil dann insbesondere die erforderliche Luftfördereinrichtung für die Zufuhr von (Verbrennungs-) Luft relativ einfach ausgestaltet sein kann.

Weiterhin wird durch das erfindungsgemäße Verfahren in einer allgemeinen Form Verdampfflüssigkeit (gegebenenfalls unter direkter Hinzufügung einer Teilmenge von Prozessabgas) durch das Brennerabgas verdampft und zusammen mit dem Brennerabgas und der Gesamtmenge des Prozessabgases in die Abgasnachbehandlungseinrichtung geleitet, um die dort vorgesehenen Reaktionen hervorzurufen. Bei einer Anwendung in Zusammenhang mit Brennkraftmaschinen, die mit Dieselkraftstoff betrieben werden, bewirkt aus verdampfter Harnstofflösung erzeugtes NH₃ in einem SCR-Katalysator eine chemische Reaktion, bei der Stickoxide und NH₃ in Stickstoff und Wasserdampf umgewandelt werden. Für den Fall, dass wiederum bei einer Anwendung in Zusammenhang mit Brennkraftmaschinen, die mit Dieselbrennstoff betrieben werden, die Verdampfflüssigkeit Brennstoff ist, wird dieser zusammen mit dem Brennerabgas und dem Prozessabgas über das Abgasrohr einem Oxidationskatalysator und einem nachfolgenden Partikelfilter zugeführt und in dem Oxidationskatalysator und/oder in einem katalytisch beschichteten Partikelfilter oxidiert. Besonderer Vorteil dieser Ausgestaltung ist es, dass die Oxidationsreaktion also erst in dem Oxidationskatalysator erfolgt und demzufolge erst hier die zur Regeneration des Partikelfilters notwendigen Temperaturen erzeugt werden. Würde, wie dies bei dem zum Stand der Technik beschriebenen System erfolgt, der eingespritzte Brennstoff bereits am Ort der Einbringung in die Abgasleitung entzündet, wäre dies mit einer höheren thermischen Belastung des gesamten Abgassystems verbunden und es müssten beträchtliche Wärmeverluste durch größere Kraftstoffmengen ausgeglichen werden. In dem Oxidationskatalysator wird durch die Oxidation des verdampften Brennstoffs beispielsweise eine Temperatur von bis zu 650 °C erzeugt, die zur Regeneration von Partikelfiltern benötigt wird.

In weiterer Ausgestaltung der Erfindung können unterschiedliche Verdampfflüssigkeiten, insbesondere Brennstoff und wässrige Harnstofflösung, über eine oder mehrere Einbringvorrichtungen in die Abgasleitung eingebracht werden. Bei nur einer Einbringvorrichtung erfolgt die Zufuhr der Verdampfflüssigkeit wechselweise gesteuert über eine entsprechende Umschalteinrichtung, während bei zwei vorhandenen Einbringvorrichtungen die Umschalteinrichtung nicht benötigt wird. Auch in diesem Fall erfolgt normalerweise eine wechselweise Zufuhr von Verdampfflüssigkeit. Diese wechselweise Zufuhr ist beispielsweise vorteilhaft einsetzbar, wenn der Oxidationskatalysator ein insbesondere Vanadium enthaltender Mehrzweckkatalysator ist, der auch geeignet ist, die selektive katalytische Reduktion von NOₓ zu unterstützen. In diesem Fall wird der Oxidationskatalysator wechselweise für unterschiedliche Funktionen eingesetzt. Selbstverständlich ist es aber auch möglich, einen Oxidationskatalysator und, getrennt davon, einen eine selektive katalytische Reduktion von NOₓ bewirkenden Katalysator vorzusehen.

In weiterer Ausgestaltung des Verfahrens wird eine Teilmenge der als Verdampfflüssigkeit eingebrachten und verdampften Brennstoffmenge unter Freisetzung von Wärme innerhalb der Abgasleitung und/oder dem Ort der Zusammenführung mit dem Prozessabgas oxidiert. Dadurch kann die thermische Gesamtleistung bei minimal eingestellter Brennerleistung so weit erhöht werden, dass eine sichere Inbetriebsetzung eines Katalysators erfolgt. Um seine Aktivität zu starten, also um eine katalytische Reaktion des eingebrachten verdampften Kraftstoff zu starten, muss beispielsweise ein Oxidationskatalysator eine vorgegebene Mindesttemperatur, beispielsweise 300 °C, erreichen. Diese Temperatur wird durch die Summation der Brennerleistung und der Leistung, die durch die verbrannte Teilmenge erzeugt wird, erreicht.

In weiterer Ausgestaltung wird die oxidierte Teilmenge der verdampften Brennstoffmenge unabhängig von der gesamten verdampften Brennstoffmenge zumindest angenähert konstant gehalten. Dabei ist es weiterhin vorgesehen, nach Überschreitung einer Grenzmenge der teilumgesetzten Brennstoffmenge die Teilumsetzung zu beenden und die Brennstoffgesamtmenge insgesamt zu verdampfen. Diese unterschiedlichen Wirkungen werden durch eine strikte Kontrolle des Verbrennungsluftverhältnisses in dem Brenner und/oder eine strikte Kontrolle der Menge der im Fall der Verwendung einer Luftstromzerstäuberdüse zugeführten Zerstäubungsluft für die Luftstromzerstäuberdüse erreicht. Weitere Einflussgrößen sind der Ort der Anbringung der Mündung der Einbringvorrichtung und die Zufuhr einer Teilmenge von Prozessabgas (zur Kühlung des Brennerabgases und folglich der Verdampfflüssigkeit), ebenfalls unter Berücksichtigung des Zufuhrortes.

Weitere vorteilhafte Ausgestaltungen der Erfindung sind der Zeichnungsbeschreibung zu entnehmen, in der in den Fig. dargestellte Ausführungsbeispiele der Erfindung näher beschrieben ist. Es zeigen:
- Fig. 1: eine erste Ausführung der mit einem Abgasrohr zusammenwirkenden Verdampfereinrichtung,
- Fig. 2: eine zweite Ausführung der mit einem Abgasrohr zusammenwirkenden Verdampfereinrichtung und
- Fig. 3: eine dritte Ausführung der mit einem Abgasrohr zusammenwirkenden Verdampfereinrichtung.

Die Verdampfereinrichtung weist bei allen Ausführungen ein Gehäuse 1 auf, in das ein Brenner 2, eine Brennkammer 3, eine Abgasleitung 4 und eine Einbringvorrichtung 5 für eine Verdampfflüssigkeit integriert sind. Dabei ist das Gehäuse 1 ebenfalls bei allen Ausführungen so mit einem Abgasrohr 6 verbunden, dass die Abgasleitung 4 mit einem Austritt 7 konzentrisch in das Abgasrohr 6 eingeführt ist und der Austritt 7 in Strömungsrichtung des durch das Abgasrohr 6 strömenden Prozessabgases angeordnet ist.

Der Brenner 2 weist eine Versorgungsvorrichtung 8a für einen gasförmigen oder flüssigen Brennstoff sowie eine Versorgungsvorrichtung 8b für Luft auf. Der Brennstoff und die Luft werden in geeigneter Weise miteinander gemischt und beispielsweise über eine Luftstromzerstäuberdüse 9 in die Brennkammer 3 eingebracht und das Gemisch wird in der Brennkammer 3 verbrannt. Dazu wird das Gemisch in dem Brenner 2 und/oder der Brennkammer 3 in geeigneter Weise entzündet. Um die Wärmeverluste gering zu halten, ist die Brennkammer 3 möglichst weitgehend isoliert in das Gehäuse 1 eingesetzt. Die Brennkammer 3 weist eine Austrittsöffnung 10 auf, durch die das Brennerabgas in die Abgasleitung 4 eintritt und entlang der Abgasleitung 4 bis zu dem Austritt 7 strömt, um sich dort mit dem in dem Abgasrohr 6 strömenden Prozessabgas, das in dem Ausführungsbeispiel Brennkraftmaschinenabgas ist, zu vermischen. Das Gemisch aus Brennstoff und Luft ist so eingestellt, dass im Bereich der Austrittsöffnung 10 aus der Brennkammer 3 die Oxidationsreaktionen weitgehend abgeschlossen sind und demzufolge ein erhitzter Abgasstrom in die Abgasleitung 4 einströmt. In die Abgasleitung 4 mündet die Einbringvorrichtung 5 mit einer Mündung 11 vorzugsweise konzentrisch zu der Abgasleitung 4 ein. Am Ort der Mündung 11 ist eine Zerstäuberdüse angeordnet, mit der die über die Einbringvorrichtung 5 zugeführte Verdampfflüssigkeit fein zerstäubt wird. Die so eingebrachte Verdampfflüssigkeit wird folglich erhitzt und verdampft. Im Bereich der Mündung 11 ist eine Venturieinrichtung 12a in die Abgasleitung 4 eingesetzt. Die Venturieinrichtung 12a bewirkt eine zusätzliche Vermischung der Verdampfflüssigkeit mit dem Abgas. Im Bereich des Austritts 7 ist eine Quencheinrichtung 13 angeordnet, die in dem Ausführungsbeispiel als Prallplatte ausgebildet ist und eine Durchmischung des aus dem Austritt 7 ausströmenden, mit der verdampften Verdampfflüssigkeit vermischten Abgases mit dem Prozessabgas bewirkt. Gleichzeitig kann die Quencheinrichtung 13 zur Vermeidung einer Entzündung des hier entstehenden Gesamtgemisches eingesetzt werden. Zu einer Strömungsgeschwindigkeitserhöhung des Prozessgasstroms ist im Bereich des Austritts 7 beziehungsweise der Quencheinrichtung 13 eine Venturieinrichtung 12b in das Abgasrohr 6 eingebaut.

Das auf die beschriebene Weise gebildete Gesamtgemisch wird dann einer Abgasnachbehandlungseinrichtung zugeführt, die einen Stickstoffoxide selektiv katalytisch reduzierenden Katalysator und/oder NOₓ-Speicherkatalysator und/oder einen Oxidationskatalysator und einen Partikelfilter aufweist.

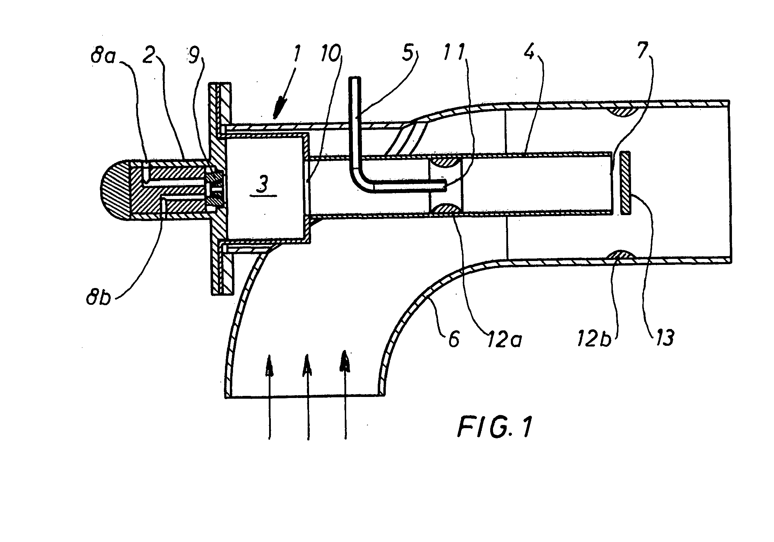

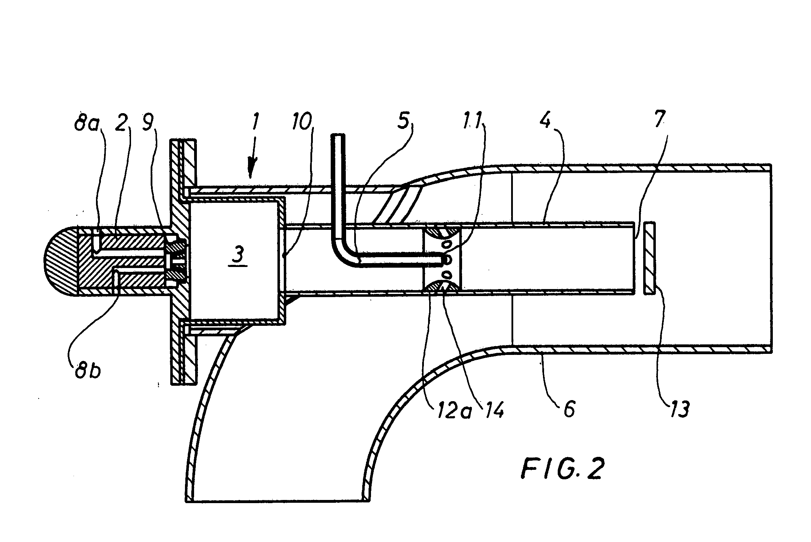

Die Ausführung gemäß Fig. 2 unterscheidet sich von der Ausführung gemäß Fig. 1 dadurch, dass hier zusätzlich im Bereich der Venturieinrichtung 12a eine Gasleitvorrichtung 14 in Form von auf den Umfang der Abgasleitung 4 angeordneten und etwa im Zentrum der Venturieinrichtung 12a mündenden Bohrungen angeordnet ist. Durch diese Gasleitvorrichtung 14 wird in die Abgasleitung 4 eine Teilmenge Prozessabgas eingeführt. Im Übrigen ist bei dieser Ausführung im Bereich der Mündung 11 keine Venturieinrichtung 12b eingebaut.

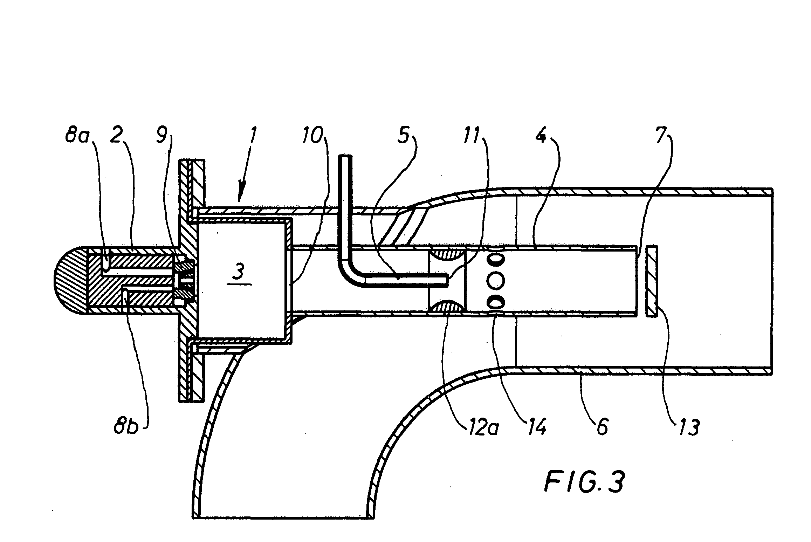

Die Ausführung gemäß Fig. 3 unterscheidet sich von der Ausführung gemäß Fig. 2 dadurch, dass die Gasleitvorrichtung 14 hier im Bereich stromabwärts der Venturieinrichtung 12a in die Abgasleitung 4 eingearbeitet ist.

### Bezugszeichen

- 1: Gehäuse
- 2: Brenner
- 3: Brennkammer
- 4: Abgasleitung
- 5: Einbringvorrichtung
- 6: Abgasrohr
- 7: Austritt
- 8a, 8b: Versorgungsvorrichtung
- 9: Luftstromzerstäuberdüse
- 10: Austrittsöffnung
- 11: Mündung
- 12a, 12b: Venturieinrichtung
- 13: Quencheinrichtung
- 14: Gasleitvorrichtung

## Patentansprüche

1. Verdampfereinrichtung, zusammenwirkend mit einem ein Prozessabgas führenden Abgasrohr (6), in das eine Abgasleitung (4) der Verdampfereinrichtung einmündet, die einen Brenner mit einer Versorgungsvorrichtung für Brennstoff und Luft sowie eine Brennkammer und die Abgasleitung (4) aufweist, und wobei in das Abgasrohr (6) stromabwärts der Einmündung der Abgasleitung (4) der Verdampfereinrichtung eine Abgasnahbehandlungseinrichtung eingesetzt ist,
**dadurch gekennzeichnet, dass** in die Abgasleitung (4) der Verdampfereinrichtung eine Einbringvorrichtung (5) für eine Verdampfflüssigkeit eingesetzt ist.

2. Verdampfereinrichtung nach Anspruch 1,
**dadurch gekennzeichnet, dass** der Brennstoff ein gasförmiger oder flüssiger Brennstoff ist.

3. Verdampfereinrichtung nach Anspruch 1 oder 2,
**dadurch gekennzeichnet, dass** die Verdampfflüssigkeit eine wässrige Harnstofflösung, ein flüssiger Brennstoff oder eine sonstige Flüssigkeit ist.

4. Verdampfereinrichtung nach einem der vorherigen Ansprüche,
**dadurch gekennzeichnet, dass** insbesondere die Mündung (11) der Einbringvorrichtung (5) in der Abgasleitung (4) eine Zerstäuberdüse, insbesondere eine Druckzerstäuberdüse oder eine Luftstromzerstäuberdüse, aufweist.

5. Verdampfereinrichtung nach einem der vorherigen Ansprüche,
**dadurch gekennzeichnet, dass** in der Abgasleitung (4) im Bereich einer Mündung (11) der Einbringvorrichtung (5) eine Venturieinrichtung (12a, 12b) angeordnet ist.

6. Verdampfereinrichtung nach einem der vorherigen Ansprüche,
**dadurch gekennzeichnet, dass** der Brenner (2), die Abgasleitung (4) und die Einbringvorrichtung (5) in ein Gehäuse (1) Integriert sind und das Gehäuse (1) an das Abgasrohr (6) adaptiert ist.

7. Verdampfereinrichtung nach einem der vorherigen Ansprüche,
**dadurch gekennzeichnet, dass** die Abgasleitung (4) mit einem Austritt (7) in das Abgasrohr (6) hineinragt.

8. Verdampfereinrichtung nach Anspruch 6 oder 7,
**dadurch gekennzeichnet, dass** die Abgasleitung (4) konzentrisch in das Abgasrohr (6) so eingeführt ist, dass der Austritt (7) aus der Abgasleitung (4) in Strömungsrichtung des Prozessabgasstroms angeordnet ist.

9. Verdampfereinrichtung nach Anspruch 7 oder 8,
**dadurch gekennzeichnet, dass** im Bereich des Austritts (7) eine Quenchvorrichtung (13) und/oder eine Venturieinrichtung (12a, 12b) vorhanden ist.

10. Verdampfereinrichtung nach einem der vorherigen Ansprüche,
**dadurch gekennzeichnet, dass** in die Abgasleitung (4) eine Prozessabgas führende Gasleitvorrichtung (14) vorzugsweise stromaufwärts der Mündung (11) der Einbringvorrichtung (5) einmündet.

11. Verdampfereinrichtung nach einem der vorherigen Ansprüche,
**dadurch gekennzeichnet, dass** die Abgasnachbehandlungseinrichtung einen Oxidationskatalysator und einen Partikelfilter aufweist.

12. Verdampfereinrichtung nach einem der vorherigen Ansprüche,
**dadurch gekennzeichnet, dass** die Abgasnachbehandlungseinrichtung einen Stickstoffoxide selektiv katalytisch reduzierenden Katalysator aufweist.

13. Verdampfereinrichtung nach einem der vorherigen Ansprüche,
**dadurch gekennzeichnet, dass** die Abgasnachbehandlungseinrichtung einen NOₓ-Speicherkatalysator aufweist.

14. Verfahren zum Betreiben einer Verdampfereinrichtung, zusammenwirkend mit einem Prozessabgas führenden Abgasrohr, in das eine Abgasleitung der Verdampfereinrichtung einmündet, die einen Brenner mit einer Versorgungsvorrichtung für Brennstoff und Luft sowie eine Brennkammer und die Abgasleitung aufweist, und wobei in das Abgasrohr stromabwärts der Einmündung der Abgasleitung der Verdampfereinrichtung eine Abgasnachbehandlungseinrichtung eingesetzt ist,
**dadurch gekennzeichnet, dass** der Brenner (2) eine thermische Grundleistung zur Verfügung stellt, deren Untergrenze durch die Bereitstellung einer ausreichenden Energiemenge zur Verdampfung einer über eine Einbringvorrichtung (5) in die Abgasleitung (4) der Verdampfereinrichtung eingebrachten Verdampfflüssigkeitsmenge vorgegeben ist.

15. Verfahren nach Anspruch 14,
**dadurch gekennzeichnet, dass** unterschiedliche Verdampfflüssigkeiten über eine oder mehrere Einbringvorrichtungen in die Abgasleitung (4) eingebracht werden.

16. Verfahren nach Anspruch 14 oder 15,
**dadurch gekennzeichnet, dass** der Brenner (2) eine zusätzlich das Prozessabgas auf eine vorgegebene Temperatur aufheizende thermische Leistung erbringt.

17. Verfahren nach einem der Ansprüche 14 bis 16,
**dadurch gekennzeichnet, dass** der Brenner (2) eine Leistung erbringt, die ausreicht, eine als Verdampfflüssigkeit eingebrachte wässrige Harnstofflösung zu verdampfen und einen als Teil der Abgasnachbehandlungseinrichtung vorhandenen Stickstoffoxide selektiv katalytisch reduzierenden Katalysator auf seine Betriebstemperatur aufzuheizen.

18. Verfahren nach Anspruch 17,
**dadurch gekennzeichnet, dass** die NH₃-Erzeugung aus der eingebrachten Harnstofflösung durch einen in die Abgasleitung (4) eingebauten Katalysator unterstützt wird.

19. Verfahren nach einem der Ansprüche 14 bis 16,
**dadurch gekennzeichnet, dass** der Brenner (2) eine Leistung erbringt, die ausreicht, einen als Verdampfflüssigkeit eingebrachten flüssigen Brennstoff zumindest zu verdampfen und einen als Teil der Abgasnachbehandlungseinrichtung vorhandenen NOₓ-Speicherkatalysator aufzuhelzen.

20. Verfahren nach einem der Ansprüche 14 bis 16,
**dadurch gekennzeichnet, dass** der Brenner (2) eine Leistung erbringt, die ausreicht, einen als Verdampfflüssigkeit eingebrachten flüssigen Brennstoff zumindest zu verdampfen und einen als Teil der Abgasnachbehandlungseinrichtung vorhandenen Oxidationskatalysator auf seine zur katalytischen Oxidation des Brennstoffs notwendige Betriebstemperatur aufzuheizen.

21. Verfahren nach Anspruch 20,
**dadurch gekennzeichnet, dass** der Aufheizvorgang durch einen in die Abgasleitung (4) eingebauten Katalysator unterstützt wird.

22. Verfahren nach einem der Ansprüche 17, 18, 20 und 21,
**dadurch gekennzeichnet dass** der Oxidationskatalysator ein insbesondere Vanadium enthaltender Mehrzweckkatalysator ist, der auch geeignet ist, die selektive Reduktion von NOₓ katalytisch zu unterstützen.

23. Verfahren nach Anspruch 19 oder 22,
**dadurch gekennzeichnet, dass** eine Teilmenge der Brennstoffmenge unter Freisetzung von Wärme innerhalb der Abgasleitung und/oder dem Ort der Zusammenführung mit dem Prozessabgas oxidiert wird.

24. Verfahren nach einem der Ansprüche 19 bis 23,
**dadurch gekennzeichnet, dass** die thermische Leistung der oxidierten Teilmenge unabhängig von der gesamten Brennstoffmenge zumindest angenähert konstant gehalten wird.

25. Verfahren nach einem der Ansprüche 19 bis 24,
**dadurch gekennzeichnet, dass** nach Überschreitung einer Grenzmenge die Brennstoffgesamtmenge verdampft wird.

26. Verfahren nach einem der Ansprüche 14 bis 25,
**dadurch gekennzeichnet, dass** in die Abgasleitung (4) vorzugsweise stromaufwärts der Einbringvorrichtung (5) mittels einer Gasleltvorrichtung (14) Prozessabgas eingeleitet wird.

27. Verfahren nach einem der Ansprüche 14 bis 26,
**dadurch gekennzeichnet, dass** durch Beeinflussung der Gastemperatur und Gaszusammensetzung am Ort der sekundären Einspritzung gewünschte chemische Reaktionen, zum Beispiel Teiloxidation, Bindung von Radikalen, Crackvorgänge, Thermolyse, Hydrolyse, gefördert werden.

28. Verfahren nach Anspruch 27,
**dadurch gekennzeichnet, dass** zur Unterstützung der gewollten Reaktion in der Abgasleitung ein Katalysator eingesetzt wird.

## Claims

1. Evaporator device, in interaction with an exhaust pipe (6) which conducts a process exhaust gas, into which exhaust pipe an exhaust-gas line (4) of the evaporator device issues, said evaporator device having a burner with a supply apparatus for fuel and air and having a combustion chamber and having the exhaust-gas line (4), and wherein an exhaust-gas aftertreatment device is inserted into the exhaust pipe (6) downstream of the point of issue of the exhaust-gas line (4) of the evaporator device, **characterized in that** an introduction apparatus (5) for a liquid for evaporation is inserted into the exhaust-gas line (4) of the evaporator device.

2. Evaporator device according to Claim 1, **characterized in that** the fuel is a gaseous or liquid fuel.

3. Evaporator device according to Claim 1 or 2, **characterized in that** the liquid for evaporation is an aqueous urea solution, a liquid fuel or some other liquid.

4. Evaporator device according to one of the preceding claims, **characterized in that**, in particular, the mouth (11) of the introduction apparatus (5) in the exhaust-gas line (4) has an atomizer nozzle, in particular a pressure atomizer nozzle or an air flow atomizer nozzle.

5. Evaporator device according to one of the preceding claims, **characterized in that** a venturi device (12a, 12b) is arranged in the exhaust-gas line (4) in the region of a mouth (11) of the introduction apparatus (5).

6. Evaporator device according to one of the preceding claims, **characterized in that** the burner (2), the exhaust-gas line (4) and the introduction apparatus (5) are integrated into a housing (1), and the housing (1) is adapted to the exhaust pipe (6).

7. Evaporator device according to one of the preceding claims, **characterized in that** the exhaust-gas line (4) projects by way of an outlet (7) into the exhaust pipe (6).

8. Evaporator device according to Claim 6 or 7, **characterized in that** the exhaust-gas line (4) is inserted concentrically into the exhaust pipe (6) such that the outlet (7) from the exhaust-gas line (4) is arranged in the flow direction of the process exhaust-gas flow.

9. Evaporator device according to Claim 7 or 8, **characterized in that**, in the region of the outlet (7), there is provided a quenching device (13) and/or a venturi device (12a, 12b).

10. Evaporator device according to one of the preceding claims, **characterized in that** a gas-conducting apparatus (14) which conducts process exhaust gas opens into the exhaust-gas line (4) preferably upstream of the mouth (11) of the introduction apparatus (5).

11. Evaporator device according to one of the preceding claims, **characterized in that** the exhaust-gas aftertreatment device has an oxidation catalyst and a particle filter.

12. Evaporator device according to one of the preceding claims, **characterized in that** the exhaust-gas aftertreatment device has a catalyst which selectively catalytically reduces nitrogen oxides.

13. Evaporator device according to one of the preceding claims, **characterized in that** the exhaust-gas aftertreatment device has a NOₓ storage catalyst.

14. Method for operating an evaporator device, in interaction with an exhaust pipe which conducts process exhaust gas, into which exhaust pipe an exhaust-gas line of the evaporator device issues, said evaporator device having a burner with a supply apparatus for fuel and air and having a combustion chamber and having the exhaust-gas line, and wherein an exhaust-gas aftertreatment device is inserted into the exhaust pipe downstream of the point of issue of the exhaust-gas line of the evaporator device, **characterized in that** the burner (2) provides a base amount of thermal power, the lower limit of which is predefined by the provision of an adequate amount of energy for the evaporation of an amount of liquid for evaporation which is introduced into the exhaust-gas line (4) of the evaporator device by way of an introduction apparatus (5).

15. Method according to Claim 14,
**characterized in that** different evaporation liquids are introduced into the exhaust-gas line (4) by way of one or more introduction apparatuses.

16. Method according to Claim 14 or 15,
**characterized in that** the burner (2) imparts an amount of thermal power which additionally heats up the process exhaust gas to a predefined temperature.

17. Method according to one of Claims 14 to 16,
**characterized in that** the burner (2) imparts an amount of power which is sufficient to evaporate an aqueous urea solution which is introduced as liquid for evaporation and to heat a catalyst, which is provided as part of the exhaust-gas aftertreatment device and which selectively catalytically reduces nitrogen oxides, to its operating temperature.

18. Method according to Claim 17,
**characterized in that** the NH₃ generation from the introduced urea solution is assisted by way of a catalyst which is installed into the exhaust-gas line (4).

19. Method according to one of Claims 14 to 16,
**characterized in that** the burner (2) imparts an amount of power which is sufficient to at least evaporate a liquid fuel which is introduced as liquid for evaporation and to heat up a NOₓ storage catalyst which is provided as part of the exhaust-gas aftertreatment device.

20. Method according to one of Claims 14 to 16,
**characterized in that** the burner (2) imparts an amount of power which is sufficient to at least evaporate a liquid fuel which is introduced as liquid for evaporation and to heat up an oxidation catalyst, which is provided as part of the exhaust-gas aftertreatment device, to its operating temperature required for the catalytic oxidation of the fuel.

21. Method according to Claim 20,
**characterized in that** the heating-up process is assisted by way of a catalyst installed into the exhaust-gas line (4).

22. Method according to one of Claims 17, 18, 20 and 21,
**characterized in that** the oxidation catalyst is a multi-purpose catalyst which, in particular, comprises vanadium and which is also suitable for catalytically assisting the selective reduction of NOₓ.

23. Method according to Claim 19 or 22,
**characterized in that** a partial quantity of the fuel quantity is oxidized, with a release of heat, within the exhaust-gas line and/or within the location at which the merging with the process exhaust gas takes place.

24. Method according to one of Claims 19 to 23,
**characterized in that** the thermal power of the oxidized partial quantity is kept at least approximately constant regardless of the total fuel quantity.

25. Method according to one of Claims 19 to 24,
**characterized in that**, after an exceedance of a threshold quantity, the entire fuel quantity is evaporated.

26. Method according to one of Claims 14 to 25,
**characterized in that** process exhaust gas is introduced into the exhaust-gas line (4), preferably upstream of the introduction apparatus (5), by means of a gas-conducting apparatus (14).

27. Method according to one of Claims 14 to 26,
**characterized in that** desired chemical reactions, for example partial oxidation, formation of radicals, cracking processes, thermolysis, hydrolysis, are promoted through manipulation of the gas temperature and gas composition at the location of the secondary injection.

28. Method according to Claim 27,
**characterized in that** a catalyst is inserted into the exhaust-gas line in order to assist the desired reaction.

## Revendications

1. Dispositif évaporateur coopérant avec un tuyau d'échappement (6) conduisant un gaz d'échappement de processus, dans lequel débouche une conduite de gaz d'échappement (4) du dispositif évaporateur qui présente un brûleur avec un dispositif d'alimentation en combustible et en air ainsi qu'une chambre de combustion et la conduite de gaz d'échappement (4), et un dispositif de post-traitement de gaz d'échappement étant inséré dans le tuyau d'échappement (6) en aval de l'embouchure de la conduite de gaz d'échappement (4) du dispositif évaporateur,
**caractérisé en ce que** dans la conduite de gaz d'échappement (4) du dispositif évaporateur est inséré un dispositif d'introduction (5) pour un liquide d'évaporation.

2. Dispositif évaporateur selon la revendication 1,
**caractérisé en ce que** le combustible est un combustible gazeux ou liquide.

3. Dispositif évaporateur selon la revendication 1 ou 2,
**caractérisé en ce que** le liquide d'évaporation est une solution d'urée aqueuse, un combustible liquide ou un autre liquide.

4. Dispositif évaporateur selon l'une quelconque des revendications précédentes, **caractérisé en ce qu'**en particulier, l'embouchure (11) du dispositif d'introduction (5) dans la conduite de gaz d'échappement (4) présente une buse de pulvérisation, en particulier une buse de pulvérisation sous pression ou une buse de pulvérisation de jet d'air.

5. Dispositif évaporateur selon l'une quelconque des revendications précédentes, **caractérisé en ce qu'**un dispositif Venturi (12a, 12b) est disposé dans la conduite de gaz d'échappement (4) dans la région d'une embouchure (11) du dispositif d'introduction (5).

6. Dispositif évaporateur selon l'une quelconque des revendications précédentes, **caractérisé en ce que** le brûleur (2), la conduite de gaz d'échappement (4) et le dispositif d'introduction (5) sont intégrés dans un boîtier (1) et le boîtier (1) est adapté au tuyau d'échappement (6).

7. Dispositif évaporateur selon l'une quelconque des revendications précédentes, **caractérisé en ce que** la conduite de gaz d'échappement (4) pénètre par une sortie (7) dans le tuyau d'échappement (6).

8. Dispositif évaporateur selon la revendication 6 ou 7, **caractérisé en ce que** la conduite de gaz d'échappement (4) est introduite concentriquement dans le tuyau d'échappement (6) de telle sorte que la sortie (7) de la conduite de gaz d'échappement (4) soit disposée dans la direction de l'écoulement du courant de gaz d'échappement de processus.

9. Dispositif évaporateur selon la revendication 7 ou 8, **caractérisé en ce qu'**un dispositif de refroidissement rapide (13) et/ou un dispositif Venturi (12a, 12b) est/sont prévu(s) dans la région de la sortie (7).

10. Dispositif évaporateur selon l'une quelconque des revendications précédentes, **caractérisé en ce qu'**un dispositif de guidage de gaz (14) guidant un gaz d'échappement de processus débouche dans la conduite de gaz d'échappement (4), de préférence en amont de l'embouchure (11) du dispositif d'introduction (5).

11. Dispositif évaporateur selon l'une quelconque des revendications précédentes, **caractérisé en ce que** le dispositif de post-traitement de gaz d'échappement présente un catalyseur d'oxydation et un filtre à particules.

12. Dispositif évaporateur selon l'une quelconque des revendications précédentes, **caractérisé en ce que** le dispositif de post-traitement de gaz d'échappement présente un catalyseur à réduction catalytique sélective des oxydes d'azote.

13. Dispositif évaporateur selon l'une quelconque des revendications précédentes, **caractérisé en ce que** le dispositif de post-traitement de gaz d'échappement présente un catalyseur à accumulation de NOx.

14. Procédé pour faire fonctionner un dispositif évaporateur coopérant avec un tuyau d'échappement conduisant un gaz d'échappement de processus, dans lequel débouche une conduite de gaz d'échappement du dispositif évaporateur qui présente un brûleur avec un dispositif d'alimentation en combustible et en air ainsi qu'une chambre de combustion et la conduite de gaz d'échappement, et dans lequel un dispositif de post-traitement de gaz d'échappement est inséré dans le tuyau d'échappement en aval de l'embouchure de la conduite de gaz d'échappement du dispositif évaporateur,
**caractérisé en ce que** le brûleur (2) fournit une puissance de base thermique dont la limite inférieure est prédéfinie par la fourniture d'une quantité d'énergie suffisante pour l'évaporation d'une quantité de liquide d'évaporation introduite par le biais d'un dispositif d'introduction (5) dans la conduite de gaz d'échappement (4) du dispositif évaporateur.

15. Procédé selon la revendication 14, **caractérisé en ce que** différents liquides d'évaporation sont introduits dans la conduite de gaz d'échappement (4) par le biais d'un ou de plusieurs dispositifs d'introduction.

16. Procédé selon la revendication 14 ou 15, **caractérisé en ce que** le brûleur (2) produit une puissance thermique chauffant en outre le gaz d'échappement de processus jusqu'à une température prédéfinie.

17. Procédé selon l'une quelconque des revendications 14 à 16, **caractérisé en ce que** le brûleur (2) produit une puissance qui suffit pour évaporer une solution d'urée aqueuse introduite en tant que liquide d'évaporation et pour chauffer jusqu'à sa température de fonctionnement un catalyseur de réduction catalytique sélective des oxydes d'azote, présent en tant que partie du dispositif de post-traitement de gaz d'échappement.

18. Procédé selon la revendication 17, **caractérisé en ce que** la génération de NH₃ à partir de la solution d'urée introduite est favorisée par un catalyseur installé dans la conduite de gaz d'échappement (4).

19. Procédé selon l'une quelconque des revendications 14 à 16, **caractérisé en ce que** le brûleur (2) produit une puissance qui suffit au moins pour évaporer un combustible liquide introduit en tant que liquide d'évaporation et pour chauffer un catalyseur à accumulation de NOx présent en tant que partie du dispositif de post-traitement de gaz d'échappement.

20. Procédé selon l'une quelconque des revendications 14 à 16, **caractérisé en ce que** le brûleur (2) produit une puissance qui suffit au moins pour évaporer un combustible liquide introduit en tant que liquide d'évaporation et pour chauffer un catalyseur d'oxydation présent en tant que partie du dispositif de post-traitement de gaz d'échappement jusqu'à sa température de fonctionnement nécessaire pour l'oxydation catalytique du combustible.

21. Procédé selon la revendication 20, **caractérisé en ce que** l'opération de chauffage est favorisée par un catalyseur installé dans la conduite de gaz d'échappement (4).

22. Procédé selon l'une quelconque des revendications 17, 18, 20 et 21, **caractérisé en ce que** le catalyseur d'oxydation est un catalyseur polyvalent contenant notamment du vanadium qui est aussi approprié pour favoriser la réduction sélective par voie catalytique des NOx.

23. Procédé selon la revendication 19 ou 22, **caractérisé en ce qu'**une quantité partielle de la quantité de combustible est oxydée en libérant de la chaleur à l'intérieur de la conduite de gaz d'échappement et/ou à l'endroit de la convergence avec le gaz d'échappement de processus.

24. Procédé selon l'une quelconque des revendications 19 à 23, **caractérisé en ce que** la puissance thermique de la quantité partielle oxydée est maintenue au moins approximativement constante indépendamment de la quantité de combustible totale.

25. Procédé selon l'une quelconque des revendications 19 à 24, **caractérisé en ce qu'**après le dépassement d'une quantité limite, la quantité totale de combustible est évaporée.

26. Procédé selon l'une quelconque des revendications 14 à 25, **caractérisé en ce que** du gaz d'échappement de processus est introduit dans la conduite de gaz d'échappement (4) de préférence en amont du dispositif d'introduction (5) au moyen d'un dispositif de guidage de gaz (14).

27. Procédé selon l'une quelconque des revendications 14 à 26, **caractérisé en ce qu'**en influençant la température du gaz et la composition du gaz à l'endroit de l'injection secondaire, des réactions chimiques souhaitées, par exemple une oxydation partielle, la formation de radicaux, des opérations de craquage, la thermolyse, l'hydrolyse, sont favorisées.

28. Procédé selon la revendication 27, **caractérisé en ce que** pour favoriser la réaction souhaitée, un catalyseur est introduit dans la conduite de gaz d'échappement.
